# EUROPEAN PATENT SPECIFICATION

(11) **EP 1 614 889 B1**
(45) Date of publication and mention of the grant of the patent: **15.09.2010**
(21) Application number: 05014554.9
(22) Date of filing: 05.07.2005
(51) Int. Cl.: F02M 35/14

(54) **Vehicle**
Fahrzeug
Véhicule

(30) Priority: 05.07.2004 JP 2004198540
(43) Date of publication of application: 11.01.2006
(73) Proprietor: Yamaha Hatsudoki Kabushiki Kaisha, Iwata-shi, Shizuoka-ken (JP)
(72) Inventor: Nishizawa, Kazuya, Iwata-shi Shizuoka-ken (JP)
(74) Representative: Grünecker, Kinkeldey, Stockmair & Schwanhäusser Anwaltssozietät

(56) References cited:
- US-B1- 6 314 931
- PATENT ABSTRACTS OF JAPAN vol. 1997, no. 04, 30 April 1997 (1997-04-30) & JP 08 319911 A (KAWASAKI HEAVY IND LTD), 3 December 1996 (1996-12-03)
- PATENT ABSTRACTS OF JAPAN vol. 2002, no. 10, 10 October 2002 (2002-10-10) & JP 2002 160686 A (SUZUKI MOTOR CORP), 4 June 2002 (2002-06-04)
- PATENT ABSTRACTS OF JAPAN vol. 2002, no. 06, 4 June 2002 (2002-06-04) & JP 2002 048021 A (HONDA MOTOR CO LTD), 15 February 2002 (2002-02-15)
- PATENT ABSTRACTS OF JAPAN vol. 1998, no. 09, 31 July 1998 (1998-07-31) & JP 10 095378 A (KAWASAKI HEAVY IND LTD), 14 April 1998 (1998-04-14)
- PATENT ABSTRACTS OF JAPAN vol. 2003, no. 06, 3 June 2003 (2003-06-03) & JP 2003 042023 A (HONDA MOTOR CO LTD), 13 February 2003 (2003-02-13)

## Description

The present invention relates to a vehicle, in particular a motorcycle, according to the preamble part of claim 1. More specifically, the present invention relates to a vehicle provided with an air cleaner In communication with an intake port of an engine, and a running wind introduction duct (air stream introduction duct) for introducing a running wind (air stream) into a primary chamber of the air cleaner.

Some motorcycles are provided with an intake system in which a running wind introduction duct is connected to an air cleaner and an outside air introduction port of the running wind introduction duct is open toward the front of that vehicle, with a view to utilizing the dynamic pressure of a running wind to enhance the charging efficiency of intake air.

Associated with the installation of the running wind introduction duct, a resonator may be provided for reducing intake noise of particular frequencies due to the intake air. In such a case, according to JP-B-2841035, a resonance chamber is externally attached to the running wind introduction duct and the resonance chamber and the inside of the running wind introduction duct are in communication with each other through a hole of predetermined dimensions.

In cases where the resonance chamber is externally attached to the running wind introduction duct as in the conventional resonator described above, however, the appearance is poor and the space required for its installation is large. The present invention has been made in view of the foregoing circumstances.

JP 2003 042023 discloses a motorcycle which is readable on the preamble part of claim 1. An inlet passage comprises a front section with a resonating space, a narrow middle section and an exhaust port. The inlet passage is formed integrally with a cowl of the motorcycle and a passage forming member.

JP 2002 160686 discloses an air duct having an air intake in order to direct an air stream via a filtering device to intake ports of an internal combustion engine of a motorcycle. In a front portion of the air duct, said air duct is provided with a bulged section. An external chamber section is connected via a passage to the bulged section of the air duct.

It is an objective of the present invention to provide a vehicle with an air stream introduction duct by which the installation space required can be reduced.

According to the present invention, said objective is solved by a vehicle having the combination of features of independent claim 1.

Preferably, the air cleaner comprises a primary chamber, and the air stream introduction duct Is configured to Introduce the air stream into said primary chamber.

Further, preferably the air stream introduction duct extends in a longitudinal direction of the vehicle along a side wall of the air cleaner, wherein an outside air introduction port of the air stream introduction duct is located forward of a front intake port, wherein the air stream introduction duct extends from the outside air introduction port to the primary chamber of the air cleaner, which is located rearward of front and rear intake portions, and wherein an outside air outlet port formed at the rear end of the air stream introduction duct is in communication with the primary chamber of the air cleaner.

According to a preferred embodiment, the resonator is constituted with an outside wall of the air stream introduction duct and a dividing wall provided in the air stream introduction duct.

Further, a branch passage may be formed in the rear part, said branch passage being opened toward a cylinder head.

According to yet another preferred embodiment, the air stream introduction duct has a base part located on an inner side in a vehicle width direction and a cover part made of a material different from that of the base part and disposed in such a manner as to cover the base part from an outer side of the engine, wherein the cover part is applied with a surface treatment.

Therein, a connection portion to the air cleaner may be formed in the base part, wherein the over part covers the connection portion from the outer side of the engine

According to still another preferred embodiment, the air cleaner includes an air cleaner case and an element for defining the inside of the air cleaner case into the primary chamber and a secondary chamber. Therein, the element is a filter disposed laterally over an upper opening of a rear bottom of a lower case of the air cleaner case such that the filter is generally horizontal.

In the following, the present invention is explained in greater detail with respect to several embodiments thereof in conjunction with the accompanying drawings, wherein:
FIG. 1 is a side view of a front body frame where an intake system according to an embodiment is provided;
FIG. 2 is a partially sectional side view of an air cleaner of the intake system;
FIG. 3 is a plan view of the intake system;
FIG. 4 is a sectional view of a running wind introduction duct (air stream introduction duct) of the intake system; and
FIG. 5 is a sectional side view of a joint member for the air cleaner.

An embodiment will be described hereinafter with reference to the accompanying drawings.

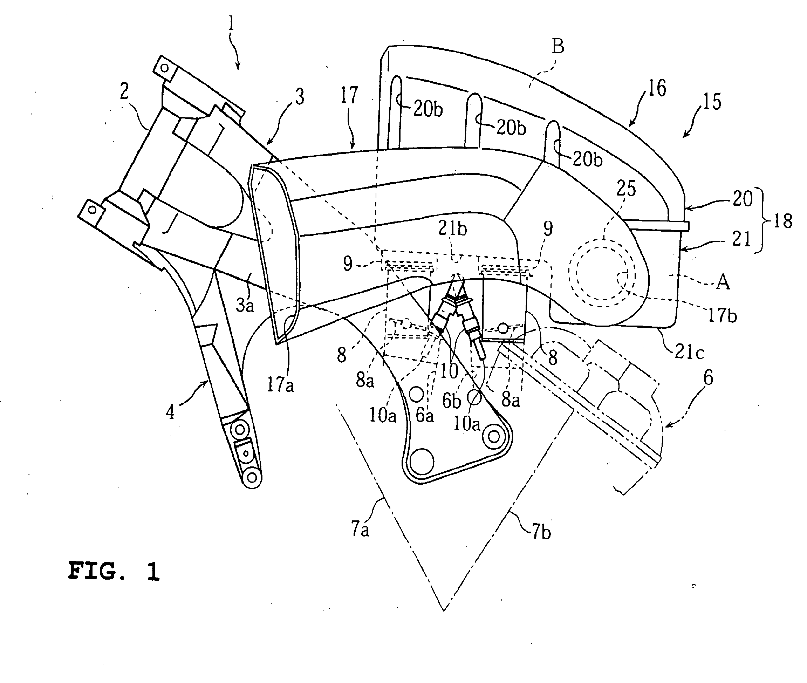

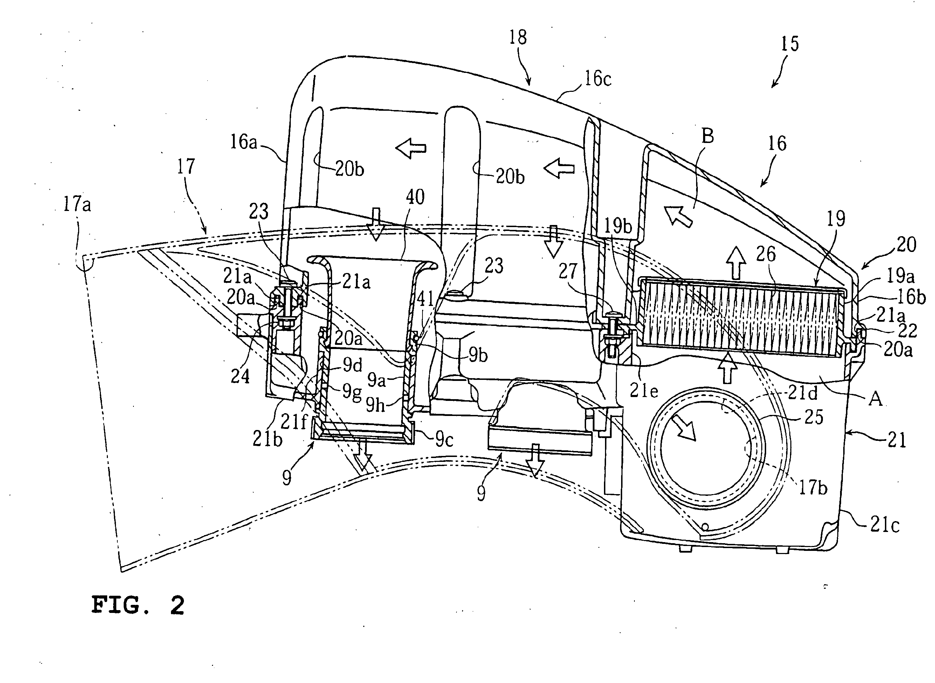

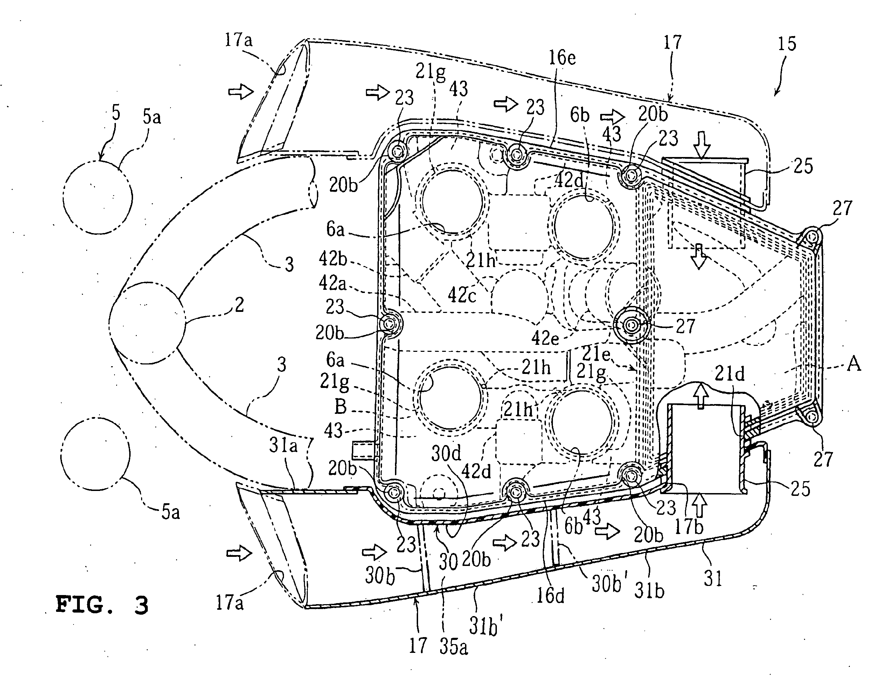

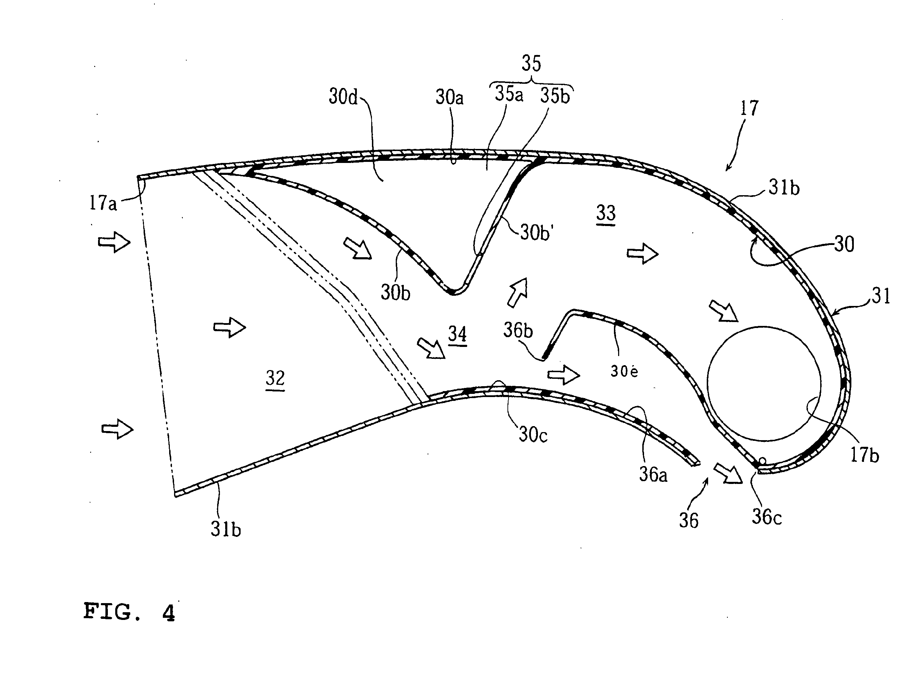

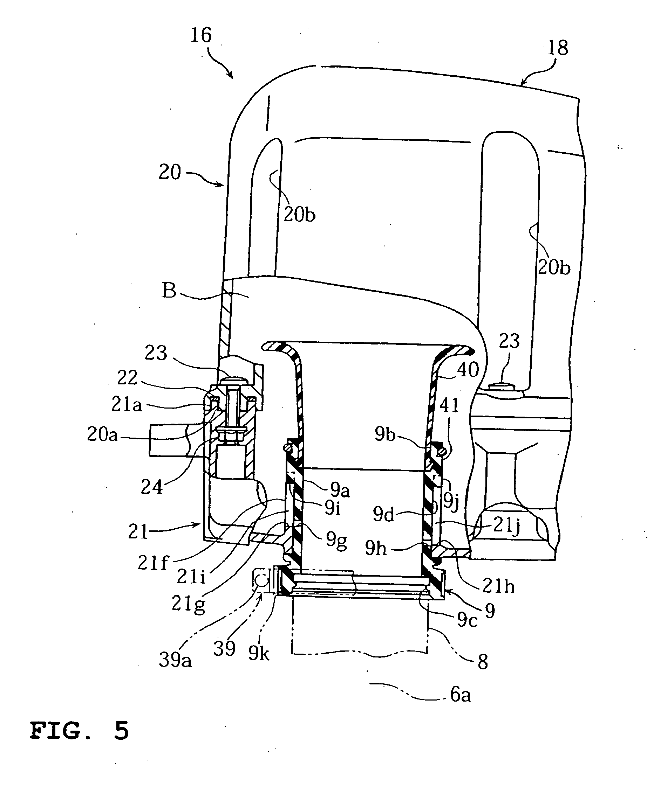

FIGS. 1 through 5 illustrate an engine according to an embodiment, in which: FIG. 1 is a side view of a front body frame where an intake system is provided; FIG. 2 is a partially sectional side view of an air cleaner of the intake system; FIG. 3 is a plan view of the intake system; FIG. 4 is a sectional view of a running wind introduction duct (air stream introduction duct) of the
intake system; and FIG. 5 is a sectional side view of a joint member for the air cleaner. Incidentally, the terms "front", "rear", "left" and "right" as used herein are meant as seen from the rider seated on the seat.

In the drawings, reference numeral 1 designates a front body frame of a motorcycle. The front body frame 1 includes a head pipe 2 located at the front end of the vehicle body, a pair of left and right main frames 3 which spread outward in a vehicle width direction while extending obliquely downward from the head pipe 2, and a pair of left and right under frames 4 extending obliquely downward from the front end of the lower surface of the main frames 3 such that a spacing from the main frames 3 becomes larger rearward.

The left and right main frames 3 are of a rectangular tube, and have the shape of a vertically longer rectangle, i.e. its height is larger than its width, as viewed in cross section.

A front fork 5 is pivotally supported by the head pipe 2 so as to rotate left and right for steering. The front fork 5 is made up of left and right fork bodies 5a, 5a coupled by upper and lower brackets. A steering shaft provided between the upper and lower brackets is pivotally supported by the head pipe 2. A front wheel and steering handlebars (not shown) are provided at a lower end and an upper end, respectively, of and between the left and right fork bodies 5a, 5a.

An engine 6 is supported in suspension between the left and right main frames 3 and under frames 4, and a rear body frame (not shown) of the vehicle. The engine 6 is mounted such that its cylinder block, cylinder head, head cover, etc. are exposed to the outside among the main frame 3, the under frame 4 and the rear body frame.

The engine 6 is a V-type 4-cylinder engine with respective axes 7a, 7b of its front and rear cylinders forming a V-bank. Within the V-bank, left and right front intake ports 6a, 6a, in communication with the front cylinders, and left and right intake ports 6b, 6b, in communication with the rear cylinders, are open upward.

Front and rear throttle bodies 8, 8, disposed with their axes directed generally vertically, are connected to upstream-end openings of the front and rear intake ports 6a, 6b, respectively. The throttle bodies 8 are each provided with a throttle valve 8a for varying its passage area.

The front and rear throttle bodies 8 are each provided with fuel injection valves 10 for the respective cylinders. The fuel injection valves 10 are disposed such that their injection port 10a is oriented toward the backside of an intake valve for opening and closing an opening to a combustion chamber at a lower end of the intake ports 6a, 6b.

The engine 6 includes an intake system 15. The intake system 15 includes an air cleaner 16 in communication with the intake ports 6a, 6b, and a pair of left and right running wind introduction ducts (air stream introduction ducts) 17, 17 for introducing a running wind (air stream) into the air cleaner 16.

The air cleaner 16 is disposed over the V-bank of the engine 6 in such a manner as to cover upstream-end openings of the front and rear throttle bodies 8, 8. The air cleaner 16 has an appearance similar to that of a fuel tank. As viewed from a lateral side of the vehicle, a top wall 16c of the air cleaner 16 is gently inclined obliquely downward from a front wall 16a side to a rear wall 16b side, as shown in FIG. 2. Also, as seen from above the vehicle, left and right side walls 16d, 16e of the air cleaner 16 are arranged to be spaced narrower in a vehicle width direction toward the rear, as shown in FIG. 3. The air cleaner 16 in its entirety is generally shaped in a trapezoid.

The left and right running wind introduction ducts 17 extend in longitudinal directions of the vehicle along the left and right side walls 16d, 16e of the air cleaner 16. The left and right running wind introduction ducts 17 are of the same symmetrical structure, and thus the left running wind introduction duct 17 will be mainly described.

An outside air introduction port 17a of the running wind introduction duct 17 is located forward of the front intake port 6a, and open forward and slightly downward and outward. The running wind introduction duct 17 extends from the outside air introduction port 17a to a primary chamber A of the air cleaner 16, which is located rearward of the front and rear intake ports 6a, 6b. An outside air outlet port 17b formed at the rear end of the running wind introduction duct 17 is connected in communication with the primary chamber A of the air cleaner 16.

A front portion of the running wind introduction duct 17 is arranged in such a manner as to follow the shape of an outside wall surface 3a of the main frame 3 of a vertically longer rectangle. That is, the outside air introduction port 17a is arranged such that the outside wall surface 3a is continued to a front inside wall surface 31 a of the running wind introduction duct 17. This allows the outside wall surface 3a to function as a guide to introduce a running wind into the outside air introduction port 17a.

Also, the running wind introduction duct 17 is arranged such that the outside air introduction port 17a is located on an outer side of the fork body 5a of the front fork 5. This allows the outside air introduction port 17a to be open without being blocked by the fork body 5a as viewed from the front of the vehicle. The running wind introduction duct 17 is disposed in such a manner as to cover front and rear joint members 9, 9 for the air cleaner 16 from an outer side in a vehicle width direction, as viewed from a lateral side of the vehicle.

As viewed from above the vehicle, the running wind introduction duct 17 is disposed obliquely in such a manner as to lie on an inner side in a vehicle width direction toward the rear of the vehicle. Also, as viewed from a lateral side of the vehicle, an upper edge of the running wind introduction duct 17 extends generally linearly rearward from the outside air introduction port 17a and then curves greatly obliquely downward toward the outside air outlet port 17b, while its lower edge curves gently upward in a convex shape all the way from the outside air introduction port 17a to the outside air outlet port 17b.

The air cleaner 16 includes an air cleaner case 18 and an element 19 for defining the inside of the air cleaner case 18 into the primary chamber A and a secondary chamber B.

The air cleaner case 18 is divided into an upper case 20 and a lower case 21. The outer periphery of the divided surface of the upper case 20 is formed with a concave groove 20a extending peripherally, and the outer periphery of the divided surface of the lower case 21 is formed with a convex portion 21 a in engagement with the concave groove 20a through a seal ring 22.

The upper case 20 and the lower case 21 are coupled to each other in a detachable but airtight manner by fastening plural bolts 23, inserted at predetermined intervals through the outer periphery of the upper case 20, into nuts 24 placed by insert molding in the mating surface of the lower case 21. A clearance recess 20b opening upward is formed in respective portions of the upper case 20 facing the bolts 23.

The lower case 21 has a front bottom 21b and a rear bottom 21c swelling downward below the front bottom 21 b. The front bottom 21 b and the rear bottom 21 c are defined by a dividing wall 21 e.

A running wind inlet port 21 d is formed on left and right sides of the rear bottom 21 c. The outside air outlet port 17b of the running wind introduction duct 17 is connected in communication with the running wind inlet port 21 d through a cylindrical communication member 25 in an airtight manner.

The element 19 has a structure as follows: A wet-type filter paper 26 is placed and fixed in a case section 19a formed in the shape of such a square tube as to cover the divided surface in the rear bottom 21 c of the lower case 21. A flange section 19b is formed along the outside periphery of the case section 19a and integrally therewith.

The flange section 19b is interposed between the divided surfaces of the upper case 20 and the lower case 21. The flange section 19b is fixed to the lower case 21, together with the upper case 20, with its front center and rear left and right ends detachably fastened by three bolts 27.

The element 19 is disposed laterally over an upper opening of the rear bottom 21 c of the lower case 21 such that the filter paper 26 is generally horizontal. The element 19 blocks the upper opening of the rear bottom 21 c.

The primary chamber A is formed in a space surrounded by the element 19 and the rear bottom 21 c below it. Also, the secondary chamber B is formed in a space surrounded by the element 19, the upper case 20 above it, and the front bottom 21 b. A most part of the secondary chamber B is displaced greatly forward of the element 19, compared to the primary chamber A.

The capacity of the secondary chamber B is about 4-5 times that of the primary chamber A. Specifically, for an engine of large displacement over 1000 cc, for example, the capacities of the primary chamber A and the secondary chamber B are respectively set at about 2.3 liters and about 10 liters.

The running wind introduction duct 17 is constituted with a base member 30 made of resin and located on an inner side in a vehicle width direction, and a cover member 31 made of an aluminum alloy and secured to the base member 30 in such a manner as to cover it from an outer side in a vehicle width direction. The surface of the cover member 31 is applied with a gloss finish, for example, for improving the appearance.

The base member 30, formed with the outside air outlet port 17b, is generally formed in the shape of a square U in cross section. The cover member 31 is made up of a front cylindrical portion 31 a formed with the outside air introduction port 17a, and a body portion 31 b generally formed in such a semi-elliptical shape in cross section as to surround the base member 30 from an outer side. The cover member 31 covers the base member 30 such that it cannot be seen from an outer side.

The running wind introduction duct 17 includes a narrowing section 34 for increasing the flow velocity of intake air, a resonator 35 for absorbing intake noise of predetermined frequencies due to the intake air, and a drain section 36 for draining out rainwater having entered into the duct. The structure of these components will be described below.

As shown mainly in FIG. 4, the running wind introduction duct 17 includes a front part 32 having the outside air introduction port 17a, and a rear part 33 with a passage area smaller than that of the front part 32. The narrowing section 34 for narrowing the passage area is formed in a border area between the front part 32 and the rear part 33.

The narrowing section 34 is formed by providing in the base member 30 on its top wall 30a side a narrowing wall 30b swelling therefrom toward a bottom wall 30c side. That is, the narrowing section 34a is formed in a space between a lower end of the iris wall 30b and the bottom wall 30c. The iris wall 30b reduces the passage area in the front part 32 gradually from the outside air introduction port 17a to the narrowing section 34.

The resonator 35 is constructed such that: a resonance space 35a with a predetermined capacity is formed by an outer wall 30d and the top wall 30a of the base member 30, and an outer wall 31b' of the cover member 31, which constitute an outside wall of the running wind introduction duct 17, and the iris wall 30b as a dividing wall provided in the running wind introduction duct 17 and in communication with the inside of the duct through a communication port 35b formed in the iris wall 30b on the rear part 33 side.

A partition wall 30e is formed integrally with the rear part 33 of the base member 30. The partition wall 30e extends generally in parallel with a rear portion 30b' of the iris wall 30b, and then bends downward to extend generally in parallel with the top wall 30a. The partition wall 30e allows the passage area in the rear part 33 to the outside air outlet port 17b to be approximately equal to that at the narrowing section 34.

The partition wall 30e and the bottom wall 30c form a branch passage 36a constituting the drain section 36. An upstream port 36b of the branch passage 36a is open toward the narrowing section 34 in the front part 32, and a downstream port (opening) 36c thereof is opened toward the cylinder head of the rear cylinders 7b of the engine 6.

The narrowing section 34, the resonance space 35a, and the branch passage 36a are formed by covering the base member 30 with the cover member 31. The communication member 25 constituting a connection portion between the base member 30 and the air cleaner 16 is covered with the cover member 31, achieving a simple appearance.

The front bottom 21 b of the lower case 21 forming the bottom of the secondary chamber B of the air cleaner 16 is formed integrally with cylindrical bosses 21f corresponding to the front and rear intake ports 6a, 6b and extending in a vertical direction. The secondary chamber B of the air cleaner 16 is connected in communication with the throttle bodies (engine side members) 8 through the joint members 9 respectively mounted and fitted in the bosses 21f.

The joint member 9 is made of elastically deformable rubber, and constituted of a cylindrical body 9a having an upper-end opening 9b and a lower-end opening 9c, and a fitting recess 9d with a diameter smaller than that of the body 9a and formed in an outside circumference thereof.

The joint member 9 is inserted as elastically deformed into the boss 21f, and then the fitting recess 9d is fitted with the boss 21f. This allows the joint member 9 to be positioned immovably in a vertical direction and abut against the inside circumferential surface of the boss 21f in an airtight manner.

An intake pipe 40 opening vertically upward is inserted and fitted into the upper-end opening 9b. The intake pipe 40 is fastened and fixed by a spring band 41 mounted on the upper-end opening 9b. Also, the throttle body 8 is inserted and fitted into the lower-end opening 9c. The throttle body 8 is fastened and fixed by a fixing band 39 mounted on the lower-end opening 9c.

As shown in FIG. 3, the front bottom 21 b of the lower case 21 is formed with various interference avoidance sections 42a-42e swelling upward to avoid interference with in-vehicle components. The interference avoidance sections 42a-42e are formed in regions around the bosses 21f, and include, for example, a harness installation portion 42a extending in a longitudinal direction in center in a vehicle width direction, a water pipe clearance portion 42b intersecting the harness installation portion 42a, an idle air adjusting solenoid clearance portion 42c formed at an intersection of the portions 42a, 42b, a pressure regulator clearance portion 42d formed between the front and rear bosses 21f, a throttle motor clearance portion 42e formed between the rear right intake port 6b and the harness installation portion 42a.

The front bottom 21 b of the lower case 21 is also formed with plural swelling sections 43 swelling relatively downward with respect to the interference avoidance sections 42a-42e. The swelling sections 43 are formed in regions where the interference avoidance sections 42a-42e are not formed, in such a manner as to contact the bosses 21f.

As mainly shown in FIG. 5, the boss 21f and the joint member 9 are formed with pairs of drain holes 9g, 21g and 9h, 21h, respectively, passing through in opposing radial directions around a central axis of the boss 21f. The secondary chamber B of the air cleaner 16 and the intake ports 6a, 6b of the engine 6 are in communication with each other through the drain holes 9g, 21 g and 9h, 21h.

The drain holes 9g, 21 g on one side are located on an outer side, in a vehicle width direction, with respect to the boss 21f, and the drain holes 9h, 21h on the other side are located on an inner side in a vehicle width direction. The inner drain holes 9h, 21h are disposed with steps so as to be disposed to be lower than the outer drain holes 9g, 21 g. The drain holes 9g, 21 g and 9h, 21 h are located in such a manner as to correspond to the swelling sections 43 swelling relatively downward.

The boss 21f is formed with slits 21i, 21j extending in continuation to the drain holes 21g, 21h to an upper end thereof. On the other hand, an upper-end portion of the fitting recess 9d surface of the joint member 9 is formed with positioning projections 9i, 9j for engagement with the slits 21i, 21j. This allows the joint member 9 to be positioned at a predetermined angle immovably in circumferential directions.

When the positioning projections 9i, 9j of the joint member 9 are in engagement with the slits 21i, 21j of the boss 21f, the drain holes 21g, 21h of the boss 21f correspond to the drain holes 9g, 9h of the joint member 9, respectively.

A band positioning section 9k for positioning the fixing band 39 at a predetermined circumferential angle is formed to project at the lower-end opening 9c of the joint member 9. When the positioning projections 9i, 9j of the joint member 9 are in engagement with the slits 21i, 21j of the boss 21f, a fastening bolt 39a of the fixing band 39 is directed to a prescribed direction for fastening. That is, the band positioning section 9k allows the fixing band 39 to be directed in a direction where a fastening jig can be inserted when assembling the air cleaner 16 to the engine 6.

The functions and effects of this embodiment will be described next.

According to this embodiment, the left and right running wind introduction ducts 17 extend from the outside air introduction port 17a located forward of the front intake port 6a, passing by the front and rear intake ports 6a, 6b, to the primary chamber A of the air cleaner 16 located rearward thereof. This secures the length of the duct long enough for the installation of the narrowing section 34 for increasing the flow velocity of intake air, the drain section 36 for draining out rainwater or the like, and the resonator 35 for reducing intake noise.

In addition, the running wind introduction duct 17 is disposed in a longitudinal direction by the front and rear intake ports 6a, 6b, and thus can be utilized as a design part for improving the appearance around the engine. This can avoid a poor appearance with the running wind introduction duct 17 exposed to the outside, even for so-called naked models with the engine 6 exposed to the lateral outside.

In this embodiment, the element 19 is disposed laterally, or generally horizontally, in the air cleaner case 18 to define the inside thereof into the primary chamber A and the secondary chamber B, and the outside air outlet port 17b of the running wind introduction duct 17 is connected to the primary chamber A located below the element 19. Thus, air having been introduced into the running wind introduction duct 17 flows from below the element 19 to above it. This makes it difficult for foreign matters such as paper having entered into the primary chamber A to be drawn toward the lower surface of the element 19. They will easily fall down freely even if they are drawn, preventing clogging in the element 19. In cases where air flows from above the element to below it as in the above- described prior art, for example, foreign matters may remain on the element to cause clogging thereof. In cases where air flows laterally through the element, clogging may be easily caused as well.

In this embodiment, the primary chamber A is located below the element 19 and the secondary chamber B is displaced greatly forward of the element 19. This can secure a necessary capacity of the secondary chamber B and minimize the height of the air cleaner 16, reducing the constraints on the design of the air cleaner 16. In other words, in cases where the secondary chamber B is located above the primary chamber A, the height of the entire air cleaner is accordingly increased. This may cause constraints on the capacity and design of the secondary chamber.

In this embodiment, the outside air introduction ports 17a of the left and right running wind introduction ducts 17 are located on outer sides, in a vehicle width direction, of the left and right fork bodies 5a. This can prevent the front fork 5 from acting as resistance to a running wind to be introduced, enhancing the air intake efficiency.

In this embodiment, the running wind introduction duct 17 is disposed obliquely in such a manner as to lie on an inner side in a vehicle width direction toward the rear of the vehicle. Thus, the running wind introduction duct 17 is connected to, and in communication with, the primary chamber A of the air cleaner 16 at a gentle angle, which reduces the passage resistance to an intake air flow for smooth air flow.

In this embodiment, the front portion of the running wind introduction duct 17 is arranged in such a manner as to follow the shape of the outside wall surface 3a of the main frame 3. Thus, the outside wall surface 3a functions as a guide to introduce a running wind into the running wind introduction duct 17. In this way, the outside wall surface 3a of the main frame 3 can be utilized effectively to enhance the intake efficiency.

In this embodiment, the left and right running wind introduction ducts 17 cover from lateral sides the joint members 9 communicatively connecting the air cleaner 16 and the respective intake ports 6a, 6b, so as to prevent the joint members 9 from being seen and prevent a poor appearance.

According to the intake system of this embodiment according to the present invention as in the appended claims, the running wind introduction duct 17 includes the resonator 35 having the communication port 35b in communication with the inside of the duct. This can prevent a poor appearance and an increased installation space, compared to conventional resonators attached externally.

In this embodiment according to the present invention as in the appended claims, the running wind introduction duct 17 includes the resonator 35, avoiding problems associated with attaching a resonator externally, such as a poor appearance and securement of an installation space.

In addition, the narrowing section 34 is formed in a border area between the front part 32 and the rear part 33 of the running wind duct 17, and the resonance space 35a of the resonator 35 is formed by effectively utilizing the iris wall 30b constituting the narrowing section 34. Thus, the resonator 35 can be provided by effectively utilizing a dead space formed in the running wind introduction duct 17 by the narrowing section 34. This can reduce intake noise while achieving satisfactory appearance and functions of the running wind introduction duct 17.

In this embodiment according to the present invention as in the appended claims, the narrowing section 34 is formed on the top wall 30a side of the base member 30 of the running wind introduction duct 17, and the branch passage 36a toward the cylinder head is formed on the bottom wall 30c side of the rear part 33. Thus, rainwater is drained out through the branch passage 36a together with a part of a running wind passing through a passage narrowed by the narrowing section 34 on a lower side of the passage. This can reliably drain out rainwater. The part of the running wind emitted through the branch passage 36a cools the cylinder head, improving the cooling performance.

In addition, rainwater or the like having entered into the running wind introduction duct 17 hits the iris wall 30b of the narrowing section 34 located on an upper side of the passage, drops down onto the bottom wall 30c, and is drained to the outside through the branch passage 36a. In this manner, rainwater can be drained out efficiently and reliably.

In this embodiment, the running wind introduction duct 17 is constituted of the base member 30 located on an inner side and the cover member 31 located on an outer side. Thus, the running wind introduction duct 17 can be fabricated simply by making the members separately and then assembling them together. Another advantage is that the degree of freedom in shape can be enhanced.

In this embodiment, the base member 30 is made of resin and the cover member 31 is made of an aluminum alloy. Thus, the narrowing section 34, the resonator 35, and the branch passage 36a can be formed easily by forming the iris wall 30b and the partition wall 30d integrally with the base member 30, and covering it with the cover member 31.

In addition, the running wind introduction duct 17 is constituted of two parts, namely the base member and the cover member. Thus, it is easy to apply a surface treatment to the cover member 31 for improving the appearance of the entire running wind introduction duct 17, even for models with the engine 6 exposed to the lateral outside.

According to the intake system of this embodiment, the front bottom 21 b of the secondary chamber B of the air cleaner 16 is formed with the cylindrical bosses 21f extending in a vertical direction, the joint member 9 is mounted and fitted in the boss 21f, and the joint member 9 and the boss 21f are formed with the pairs of drain holes 9g, 21 g and 9h, 21 h, respectively, passing through in radial directions. Thus, drainage accumulated at the front bottom 21 b is sucked directly into the intake ports 6a, 6b through the drain holes 9g, 21 g and 9h, 21 h. This allows efficient drainage disposal with a simple structure, compared to conventional approaches using a communication pipe.

In this embodiment, the front bottom 21b of the air cleaner 16 is formed with the interference avoidance sections 42a-42e to avoid interference with in-vehicle components. Thus, it is possible to lower the front bottom 21 b while avoiding interference with various in-vehicle components, and increase the capacity of the clean (secondary) side of the air cleaner 16 without increasing the height thereof.

In addition, the front bottom 21b is also formed with the swelling sections 43 swelling relatively downward with respect to the interference avoidance sections 42a-42e, and the drain holes 9g, 21g and 9h, 21h are located in positions corresponding to the swelling sections 43. Thus, drainage accumulated at the front bottom 21 b can be easily collected at the swelling sections 43 for further efficient drainage disposal.

In this embodiment, the boss 21f is formed with the slits 21 i, 21j extending in continuation to the drain holes 21 g, 21 h to an upper end thereof, the joint member 9 is formed with the positioning projections 9i, 9j for engagement with the slits 21 i, 21j, and when the positioning projections 9i, 9j are in engagement with the slits 21 i, 21j, the drain holes 21g, 21h of the boss 21f correspond to the drain holes 9g, 9h of the joint member 9, respectively. Thus, simply inserting and fitting the joint member 9 into the boss 21f allows the drain holes 9g, 21g and 9h, 21h of the two members to be positioned with respect to each other, so as to facilitate their assembly work.

In this embodiment, when the positioning projections 9i, 9j of the joint member 9 are in engagement with the slits 21 i, 21 j, the fastening bolt 39a of the fixing band 39 is directed to a prescribed direction for fastening. Thus, simply inserting and fixing the joint member 9 into the boss 21f can make the fastening work of the fixing band 39 easy.

The description above discloses (amongst other) an embodiment according to the present invention as in the appended claims of an engine including an air cleaner in communication with an intake port of the engine; and a running wind introduction duct for introducing a running wind into a primary chamber of the air cleaner, in which the running wind introduction duct includes a resonator for absorbing predetermined frequencies, and the resonator has a predetermined capacity and has a communication port in communication with an inside of the introduction duct. Therein, the wording "include a resonator" means providing a resonator in a running wind introduction duct, and includes cases where the resonator is integral with the running wind introduction duct, and cases where they are separate from each other.

Accordingly, a running wind introduction duct includes a resonator having a communication port in communication with the inside of the duct. This can prevent a poor appearance and an increased installation space, compared to conventional resonators attached externally.

The description further discloses an embodiment of an engine, in which the resonator is constituted with an outside wall of the running wind introduction duct and a dividing wall provided in the duct.

Accordingly, the resonator is constituted with an outside wall of the running wind introduction duct and a dividing wall provided in the duct, achieving a simple structure. This can also avoid an increase in the number of parts.

The description further discloses an embodiment of an engine according to the present invention as in the appended claims, in which the running wind introduction duct includes a front part and a rear part with a passage area smaller than the front part, a narrowing section for narrowing a passage area is formed in a border area between the front part and the rear part, and the narrowing section constitutes a part of the resonator.

Accordingly, a narrowing section formed in a border area between a front part and a rear part of the running wind introduction duct constitutes a part of the resonator. Thus, the resonator can be provided by effectively utilizing a dead space formed in the running wind introduction duct by the narrowing section. This can reduce intake noise while achieving satisfactory appearance and functions of the running wind introduction duct.

The description further discloses an embodiment of an engine according to the present invention as in the appended claims, in which the narrowing section is provided on a top wall side of the running wind introduction duct, and an opening toward an outside is provided on a bottom wall side of the rear part.

Accordingly, the narrowing section is provided on a top wall side of the running wind, introduction duct, and an opening toward the outside is provided on a bottom wall side of the rear part. Thus, rainwater or the like having entered into the running wind introduction duct hits the narrowing section located on an upper side of the passage, and is drained through the opening on the bottom wall side. In this manner, rainwater can be drained out efficiently.

The description further discloses an embodiment of an engine, in which a branch passage is formed in the rear part, and the branch passage is open toward a cylinder head.

Accordingly, a branch passage is open toward a cylinder head. Thus, a part of a running wind passing in the vicinity of the bottom of the passage narrowed by the narrowing section is emitted through the branch passage to cool the cylinder head, improving the cooling performance.

The description above further discloses an embodiment of an engine, in which the running wind introduction duct has a base part located on an inner side in a vehicle width direction and a cover part made of a material different from that of the base part and disposed in such a manner as to cover the base part from an outer side of the engine, and the cover part is applied with a surface treatment for improving an appearance.

Accordingly, the running wind introduction duct is constituted of a base part located on an inner side and a cover part located on an outer side. Thus, the running wind introduction duct can be fabricated simply by making the parts separately and then assembling them together. Another advantage is that the degree of freedom in shape can be enhanced. In a case where the base part is made of resin and the cover part is made of metal, for example, the resonator, the branch passage and the like can be formed easily by forming the front and rear parts or the iris wall integrally with the base part, and covering it with the cover part.

In addition, the cover part is applied with a surface treatment for improving the appearance of the entire running wind introduction duct. This can avoid a poor appearance even for models with the engine not covered with a body cover but exposed to the lateral outside, for example.

The description above further discloses an embodiment of an engine, in which a connection portion to the air cleaner is formed in the base part, and the cover part covers the connection portion from an outer side of the engine.

Accordingly, a connection portion to the air cleaner is formed in the base part and covered with the cover part. This can achieve a simple appearance with the connection portion kept from being seen from the outside.

Thus, amongst the afore-described embodiments, there is disclosed a most preferred embodiment according to the present invention as in the appended claims to provide an engine provided with a resonator in its running wind introduction duct for preventing a poor appearance and a large installation space, wherein the engine 6 includes an air cleaner 16 in communication with intake ports 6a, 6b of the engine 6, and a running wind introduction duct 17 for introducing a running wind into a primary chamber A of the air cleaner 16. The running wind introduction duct 17 includes a resonator 35 for absorbing predetermined frequencies. The resonator 35 has a predetermined capacity and has a communication port 35b in communication with the inside of the introduction duct.

## Claims

1. Vehicle, in particular motorcycle, having an engine (6), an air cleaner (16) in communication with an intake port (6a) of the engine (6), and an air stream introduction duct (17) for introducing an air stream into the air cleaner (16), the air stream introduction duct (17) including a front part (32), a rear part (33) and a passage area communicating between the front part (32) and the rear part (33), the passage area being smaller than the front part (32), wherein a narrowing section (34) for narrowing the passage area is formed in a border area between the front part (32) and the rear part (33), and wherein the narrowing section (34) constitutes a part of a resonator (35),
the air stream introduction duct (17) including said resonator (35) for absorbing predetermined frequencies, said resonator (35) having a predetermined capacity and having a communication port (35b) in communication with an inside of the introduction duct (17),
**characterized in that**
the narrowing section (34) is provided on a top wall side of the air stream introduction duct (17), and an opening (36c) toward an outside is provided on a bottom wall side of the rear part (33) of said air stream introduction duct (17).

2. Vehicle according to claim 1, **characterized in that** the air cleaner (16) comprises a primary chamber (A), and the air stream introduction duct (17) is configured to introduce the air stream into said primary chamber (A).

3. Vehicle according to claim 2, **characterized in that** the air stream introduction duct (17) extends in a longitudinal direction of the vehicle along a side wall (16d,16e) of the air cleaner (16), wherein an outside air introduction port (17a) of the air stream introduction duct (17) is located forward of a front intake port (6a), wherein the air stream introduction duct (17) extends from the outside air introduction port (17a) to the primary chamber (A) of the air cleaner (16), which is located rearward of front and rear intake portions (6a, 6b), and wherein an outside air outlet port (17b) formed at the rear end of the air stream introduction duct (17) is in communication with the primary chamber (A) of the air cleaner (16).

4. Vehicle according to one of the claims 1 to 3, **characterized in that** the resonator (35) is constituted with an outside wall (30d,30a,31 b') of the air stream introduction duct (17) and a dividing wall (30b) provided in the air stream introduction duct (17).

5. Vehicle according to one of claims 1 to 4, **characterized by** a branch passage (36) formed in the rear part (33), said branch passage (36) being opened toward a cylinder head.

6. Vehicle according to one of the claims 1 to 5, **characterized in that** the air stream introduction duct (17) has a base part (30) located on an inner side in a vehicle width direction and a cover part (31) made of a material different from that of the base part (30) and disposed in such a manner as to cover the base part (30) from an outer side of the engine, wherein the cover part (31) is applied with a surface treatment.

7. Vehicle according to claim 6, **characterized by** a connection portion (25) to the air cleaner (16) formed in the base part (30), wherein the cover part (31) covers the connection portion (25) from the outer side of the engine.

8. Vehicle according to one of the claims 1 to 7, **characterized in that** the air cleaner (16) includes an air cleaner case (18) and an element (19) for defining the inside of the air cleaner case (18) into a primary chamber (A) and a secondary chamber (B).

9. Vehicle according to claim 8, **characterized in that** the element (19) is a filter disposed laterally over an upper opening of a rear bottom (21 c) of a lower case (21) of the air cleaner case (18) such that the filter is generally horizontal.

## Patentansprüche

1. Fahrzeug, insbesondere Motorrad, mit einer Brennkraftmaschine (6), einem Luftfilter (16) in Verbindung mit einer Einlassöffnung (6a) der Brennkraftmaschine (6), und einem Luftstromeinleitungskanal (17) zum Einleiten eines Luftstromes in den Luftfilter (16), wobei der Luftstromeinleitungskanal (17) ein vorderes Teil (32), ein hinteres Teil (33) und einen Kanalbereich enthält, die das vordere Teil (32) und das hintere Teil (33) verbindet, wobei der Kanalbereich kleiner als der vordere Teil (32) ist, wobei ein sich verengender Abschnitt (34) zum Verengen des Kanalbereiches in einem Grenzbereich zwischen dem vorderen Teil (32) und dem hinteren Teil (33) gebildet ist und wobei der sich verengende Abschnitt (34) einen Teil eines Resonators (35) bildet,
wobei der Luftstromeinleitungskanal (17) den Resonator (35) zum Absorbieren von vorbestimmten Frequenzen enthält, der Resonator (35) eine vorbestimmte Kapazität hat und eine Verbindungsöffnung (35b) in Verbindung mit einem Inneren des Einleitungskanals (17) hat,
**dadurch gekennzeichnet, dass**
der sich verengende Abschnitt (34) an einer obersten Wandseite des Luftstromeinleitungskanals (17) vorgesehen ist und eine Öffnung (36c) in Richtung nach außen an einer Bodenwandseite des hinteren Teils (33) des Luftstromeinleitungskanals (17) vorgesehen ist.

2. Fahrzeug nach Anspruch 1, **dadurch gekennzeichnet, dass** der Luftfilter (16) eine Primärkammer (A) aufweist und der Luftstromeinleitungskanal (17) konfiguriert ist, den Luftstrom in die Primärkammer (A) einzuleiten.

3. Fahrzeug nach Anspruch 2, **dadurch gekennzeichnet, dass** sich der Luftstromeinleitungskanal (17) sich in einer Längsrichtung des Fahrzeuges entlang einer Seitenwand (16d, 16e) des Luftfilters (16) erstreckt, wobei eine Außenluft- Einleitungsöffnung (17a) des Luftstromeinleitungskanals (17) vorwärts einer vorderen Einlassöffnung (6a) angeordnet ist, wobei sich der Luftstromeinleitungskanal (17) von der Außenluft- Einleitungsöffnung (17a) zu der Primärkammer (A) des Luftfilters (16) erstreckt, der hinter den vorderen und hinteren Einlassabschnitten (6a, 6b) angeordnet ist, und wobei eine Außenluft- Auslassöffnung (17b), gebildet an dem hinteren Ende des Luftstromeinleitungskanals (17), in Verbindung mit der Primärkammer (A) des Luftfilters (16) ist.

4. Fahrzeug nach einem der Ansprüche 1 bis 3, **dadurch gekennzeichnet, dass** der Resonator (35) mit einer Außenwand (30d, 30a, 31 b') des Luftstromeinleitungskanals (17) gebildet ist und eine Trennwand (30b) in dem Luftstromeinleitungskanal (17) vorgesehen ist.

5. Fahrzeug nach einem der Ansprüche 1 bis 4, **gekennzeichnet durch** einen Abzweigungskanal (36), gebildet in dem hinteren Teil (33), wobei der Verzweigungskanal (36), in Richtung zu einem Zylinderkopf geöffnet ist.

6. Fahrzeug nach einem der Ansprüche 1 bis 5, **dadurch gekennzeichnet, dass** der Luftstromeinleitungskanal (17) ein Basisteil (30) hat, angeordnet an einer Innenseite in einer Richtung der Fahrzeugbreite, und ein Abdeckteil (31), hergestellt aus einem Material, das von dem des Basisteils (30) verschieden ist, und derart angeordnet, um das Basisteil (30) von der Außenseite der Brennkraftmaschine abzudecken, wobei das Abdeckteil (31) mit einer Oberflächenbehandlung versehen ist.

7. Fahrzeug nach Anspruch 6, **gekennzeichnet durch** einen Verbindungsabschnitt (25) zu dem Luftfilter (16), gebildet in dem Basisteil (30), wobei das Abdeckteil (31) den Verbindungsabschnitt (25) von der Außenseite der Brennkraftmaschine abdeckt.

8. Fahrzeug nach einem der Ansprüche 1 bis 7, **dadurch gekennzeichnet, dass** der Luftfilter (16) ein Luftfiltergehäuse (18) und ein Bauteil (19) enthält, um das Innere des Luftfiltergehäuses (18) in eine Primärkammer (A) und eine Sekundärkammer (B) zu bilden.

9. Fahrzeug nach Anspruch 8, **dadurch gekennzeichnet, dass** das Bauteil (19) ein Filter ist, seitlich über einer oberen Öffnung eines hinteren Bodens (21 c) eines unteren Gehäuses (21) des Luftfiltergehäuses (18) derart angeordnet, dass der Filter im Wesentlichen horizontal ist.

## Revendications

1. Véhicule, en particulier moto, ayant un moteur (6), un filtre à air (16) qui communique avec un orifice d'admission (6a) du moteur (6), et un conduit d'introduction d'écoulement d'air (17) pour introduire un écoulement d'air dans le filtre à air (16), le conduit d'introduction d'écoulement d'air (17) comprenant une partie avant (32), une partie arrière (33) et une zone de passage qui fait communiquer les parties avant (32) et arrière (33), la zone de passage étant plus petite que la partie avant (32), étant précisé qu'une section de resserrement (34) destinée à resserrer la zone de passage est formée dans une zone limite entre les parties avant (32) et arrière (33), et que la zone de resserrement (34) constitue une partie d'un résonateur (35),
le conduit d'introduction d'écoulement d'air (17) comprenant ledit résonateur (35) pour absorber des fréquences prédéterminées, et le résonateur (35) ayant une capacité prédéterminée et ayant un orifice de communication (35b) qui communique avec l'intérieur du conduit d'introduction (17),
**caractérisé en ce que** la section de resserrement (34) est disposée sur un côté de paroi supérieur du conduit d'introduction d'écoulement d'air (17), et une ouverture (36c) dirigée vers l'extérieur est prévue sur un côté de paroi inférieur de la partie arrière (33) du conduit d'introduction d'écoulement d'air (17).

2. Véhicule selon la revendication 1, **caractérisé en ce que** le filtre à air (16) comprend une chambre primaire (A), et le conduit d'introduction d'écoulement d'air (17) est conçu pour introduire l'écoulement d'air dans ladite chambre primaire (A).

3. Véhicule selon la revendication 2, **caractérisé en ce que** le conduit d'introduction d'écoulement d'air (17) s'étend dans un sens longitudinal du véhicule, le long d'une paroi latérale (16d, 16e) du filtre à air (16), étant précisé qu'un orifice d'introduction d'air extérieur (17a) du conduit d'introduction d'écoulement d'air (17) se trouve en avant d'un orifice d'admission avant (6a) dudit conduit (17), que ledit conduit d'introduction d'écoulement d'air (17) s'étend de l'orifice d'introduction d'air extérieur (17a) à la chambre primaire (A) du filtre à air (16) qui se trouve en arrière des parties d'admission avant et arrière (6a, 6b), et qu'un orifice de sortie d'air extérieur (17b) formé sur l'extrémité arrière du conduit d'introduction d'écoulement d'air (17) communique avec la chambre primaire (A) du filtre à air (16).

4. Véhicule selon l'une des revendications 1 à 3, **caractérisé en ce que** le résonateur (35) est pourvu d'une paroi extérieure (30d, 30a, 31b') du conduit d'introduction d'écoulement d'air (17) et d'une cloison (30b) prévue dans ledit conduit (17).

5. Véhicule selon l'une des revendications 1 à 4, **caractérisé par** un passage de dérivation (36) formé dans la partie arrière (33), ledit passage (36) étant ouvert vers une tête de cylindre.

6. Véhicule selon l'une des revendications 1 à 5, **caractérisé en ce que** le conduit d'introduction d'écoulement d'air (17) a une partie de base (30) située sur un côté intérieur, dans le sens de la largeur du véhicule, et une partie de recouvrement (31) composée d'un matériau différent de celui de la partie de base (30) et disposée de manière à couvrir celle-ci à partir d' un côté extérieur du moteur, la partie de recouvrement (31) étant soumise à un traitement de surface.

7. Véhicule selon la revendication 6, **caractérisé par** une partie de liaison (25) avec le filtre à air (16) qui est formée dans la partie de base (30), la partie de recouvrement (31) couvrant ladite partie de liaison (25) à partir de l'extérieur du moteur.

8. Véhicule selon l'une des revendications 1 à 7, **caractérisé en ce que** le filtre à air (16) comprend un carter de filtre à air (18) et un élément (19) pour diviser l'intérieur du carter de filtre à air (18) en une chambre primaire (A) et une chambre secondaire (B).

9. Véhicule selon la revendication 8, **caractérisé en ce que** l'élément (19) est un filtre disposé latéralement sur une ouverture supérieure d'un fond arrière (21c) d'une partie inférieure (21) du carter de filtre à air (18) de telle sorte que le filtre soit globalement horizontal.
